# FASCICULE DE BREVET EUROPEEN

(11) **EP 1 172 293 B1**
(45) Date de publication et mention de la délivrance du brevet: **04.02.2004**
(21) Numéro de dépôt: 01401828.7
(22) Date de dépôt: 09.07.2001
(51) Int. Cl.: B64C 27/00, B64C 27/615

(54) **Aéronef à voilure tournante à commande de pas électrique**
Drehflügelflugzeug mit elektrischer Blattwinkelverstellsteuerung
Rotary wing aircraft with electric blade pitch control

(30) Priorité: 13.07.2000 FR 0009203
(43) Date de publication de la demande: 16.01.2002
(73) Titulaire: EUROCOPTER, 13725 Marignane Cédex (FR)
(72) Inventeur: Toulmay, François, 13127 Vitrolles (FR)
(74) Mandataire: Renaud-Goud, Thierry

(56) Documents cités:
- EP-A- 0 947 422
- US-A- 5 387 083
- US-A- 5 409 183
- US-A- 5 626 312

## Description

La présente invention concerne un aéronef à voilure tournante, par exemple du type hélicoptère, dans lequel un rotor, muni de pales et constituant ladite voilure tournante, est intégralement commandé en pas par voie électrique.

On sait que les hélicoptères usuels comportent de nombreux organes mécaniques et hydromécaniques nécessaires à la commande du pas collectif et du pas cyclique des pales de leur rotor. De tels organes sont coûteux et de plus présentent une masse importante.

On a donc déjà tenté de réduire la masse et le coût d'un tel hélicoptère (voir par exemple les brevets US-5 387 083, US-5 409 183 et US-5 626 312) en prévoyant des commandes de vol électriques contrôlant le braquage de volets, dont chacun d'eux est monté sur une desdites pales du rotor et est apte à commander aérodynamiquement le pas de la pale associée, ce qui permet d'éliminer quelques organes mécaniques et hydromécaniques tels que vérins, pompes et circuits hydrauliques, mais aucun des autres organes mécaniques.

Par ailleurs, dans ces modes de réalisation connus d'hélicoptères à commandes électriques et volets de commande en pas, apparaissent des problèmes d'instabilité tels que les critères de sécurité usuels en aéronautique ne peuvent être satisfaits vis-à-vis de pannes élémentaires ou combinées qui ne sont pas hautement improbables.

La présente invention a pour objet de remédier à ces inconvénients. Elle concerne un aéronef dans lequel les changements de pas des pales sont obtenus à l'aide de tels volets, perfectionné de façon à permettre d'éliminer la quasi totalité des organes mécaniques et hydromécaniques de commande en pas du rotor, tout en assurant une sécurité d'utilisation parfaite.

A cette fin, selon l'invention, l'aéronef comportant :
- un fuselage ;
- des organes de pilotage à la disposition d'un pilote, disposés dans ledit fuselage et aptes à engendrer des consignes de pilotage ;
- au moins un rotor tournant par rapport audit fuselage et assurant les fonctions de sustentation dudit aéronef et de déplacement de celui-ci selon des axes de roulis et de tangage ainsi qu'en translation verticale et horizontale, ledit rotor comprenant au moins deux pales dont le pas peut être commandé pour permettre audit rotor d'assurer lesdites fonctions ;
- des volets orientables portés par lesdites pales pour commander le pas de celles-ci, chacune desdites pales comportant une pluralité de volets alignés le long de l'envergure de ladite pale et chaque pale comportant autant de volets, agencés de manière identique, que n'importe laquelle des autres pales ;
- des dispositifs d'actionnement électriques portés par lesdites pales pour actionner lesdits volets orientables en vue de la commande du pas desdites pales ;
- un dispositif de commande de vol disposé dans ledit fuselage et engendrant, à partir desdites consignes de pilotage et de signaux représentatifs de paramètres de vol, une pluralité d'ordres de commande pour la pluralité desdits dispositifs d'actionnement électriques ;
- une pluralité de liaisons prévues entre ledit dispositif de commande de vol et chacun desdits dispositifs d'actionnement électriques pour adresser à chacun de ces dispositifs électriques, à travers ladite interface, l'un desdits ordres de commande ; et
- une interface stationnaire-rotatif entre ledit fuselage et ledit rotor permettant à ladite pluralité de liaisons de transmettre lesdits ordres de commande auxdits actionneurs électriques,
aéronef dans lequel :
- ledit dispositif de commande de vol comporte autant de voies de commande distinctes qu'il y a de volets sur chaque pale ;
- ladite interface comporte autant de voies de transmission distinctes qu'il y a de voies de commande distinctes ;
- lesdites voies de commande distinctes dudit dispositif de commande de vol sont respectivement associées auxdites voies de transmission distinctes de ladite interface pour former, avec lesdites liaisons, autant de chaînes de commande distinctes qu'il y a de volets sur chaque pale ; et
- chacune desdites chaînes de commande engendre et véhicule les ordres de commande pour tous les dispositifs d'actionnement électriques des volets de même rang sur lesdites pales.

Ainsi, grâce à la pluralité des volets montés sur chacune desdites pales et à la pluralité des ordres de commande adressés, par voie électrique et/ou optique, aux dispositifs d'actionnement électriques desdits volets, il est possible d'effectuer électriquement la totalité des commandes en pas du rotor dudit aéronef. On peut donc éliminer tous les organes mécaniques et hydromécaniques utilisés usuellement à cet effet, à savoir les leviers de pas, les biellettes de commande, les plateaux cycliques coulissant et tournant, les pompes et circuits hydrauliques, les vérins, les tiges et leviers de commande et le combinateur.

Il en résulte un allégement important et une simplification considérable des ensembles mécaniques propres à un aéronef à voilure tournante et notamment à un hélicoptère. De plus, un tel système de commande de rotor est facilement transposable et reconfigurable d'un type d'aéronef à un autre, l'essentiel des modifications consistant alors en un nouveau réglage des divers paramètres avec un impact limité sur les dispositifs matériels.

De plus, dans l'aéronef conforme à la présente invention, la multiplicité des liaisons entre le dispositif de commande de vol et les volets des pales permet d'obtenir une multiplicité de chaînes de commande indépendantes, n'ayant aucun organe en commun.

Ainsi, en cas de panne d'éléments matériels ou logiciels, l'aéronef selon l'invention peut continuer d'être piloté en toute sécurité, bien qu'avec éventuellement des performances réduites. La sécurité de vol est donc assurée.

Le dispositif de commande de vol peut être du type décrit dans le brevet américain US-6 059 225, qui est consideré comme l'état de la technique le plus proche.

Pour accroître encore la fiabilité et la sécurité, lesdites chaînes de commande peuvent être réalisées selon des technologies différentes. Il est alors avantageux que les chaînes de commande de volets proches des extrémités libres desdites pales --ce sont ces volets qui présentent la plus grande efficacité aérodynamique-- soient réalisés selon la technologie considérée comme la plus fiable.

De préférence, chaque dispositif d'actionnement électrique est logé dans la pale correspondante, à proximité immédiate du volet auquel il est associé. Ainsi, la liaison mécanique entre un dispositif d'actionnement électrique et son volet peut être courte, de sorte que la commande dudit volet est immédiate et directe et que l'on évite de longues tiges de commande cheminant dans la pale.

Pour des raisons de sécurité supplémentaires, chaque dispositif d'actionnement électrique comporte au moins deux actionneurs électriques --vérin ou moteur-- montés en parallèle.

Les volets de commande du pas des pales pourraient être montés, sur ces dernières, du côté de leur bord d'attaque. Cependant, pour des raisons de stabilité, il est préférable que lesdits volets soient agencés dans le bord de fuite desdites pales.

De plus, afin de parer à une défaillance éventuelle d'une chaîne de commande par défaut de l'un de ses éléments spécifique à une seule pale, ce qui ferait courir le risque d'un déséquilibre important des forces s'exerçant sur le rotor, on prévoit un système d'autosurveillance vérifiant en permanence, pour chaque chaîne de commande, la conformité de la réalisation des braquages des volets de la chaîne vis-à-vis des ordres de commande. En cas de non conformité de la réalisation, tous les volets de la chaîne sont immobilisés mécaniquement. Le maintien en position des volets nécessaire pour prévenir tout phénomène de flottement aérodynamique ou aéroélastique, doit être effectif quelle que soit la défaillance en cause, y compris s'il s'agit de la perte de l'énergie électrique propre à la chaîne considérée.

Par ailleurs, grâce au fait que, dans l'aéronef à voilure tournante conforme à l'invention, tous les ordres de commande de pas sont électriques ou optiques, on peut aisément ajouter auxdits ordres des signaux auxiliaires pour réaliser des fonctions supplémentaires, telles que, comme cela sera décrit ci-après, une fonction antirésonance, une fonction d'autoréglage de voilure, ou bien encore des fonctions antivibratoire et antibruit.

Les figures du dessin annexé feront bien comprendre comment l'invention peut être réalisée. Sur ces figures, des références identiques désignent des éléments semblables.

La figure 1 est une vue générale, schématique et partielle, d'un hélicoptère pourvu de commandes de vol conformément à la présente invention.

La figure 2 est une coupe selon la ligne II-II de la figure 1, illustrant schématiquement la disposition des volets de commande de pas et de leurs actionneurs, sur les pales du rotor de l'hélicoptère.

La figure 3 est un schéma synoptique du système de commande de vol de la figure 1.

Les figures 4 et 5 illustrent deux modes de réalisation du dispositif de commande de vol engendrant les ordres de commande du braquage desdits volets.

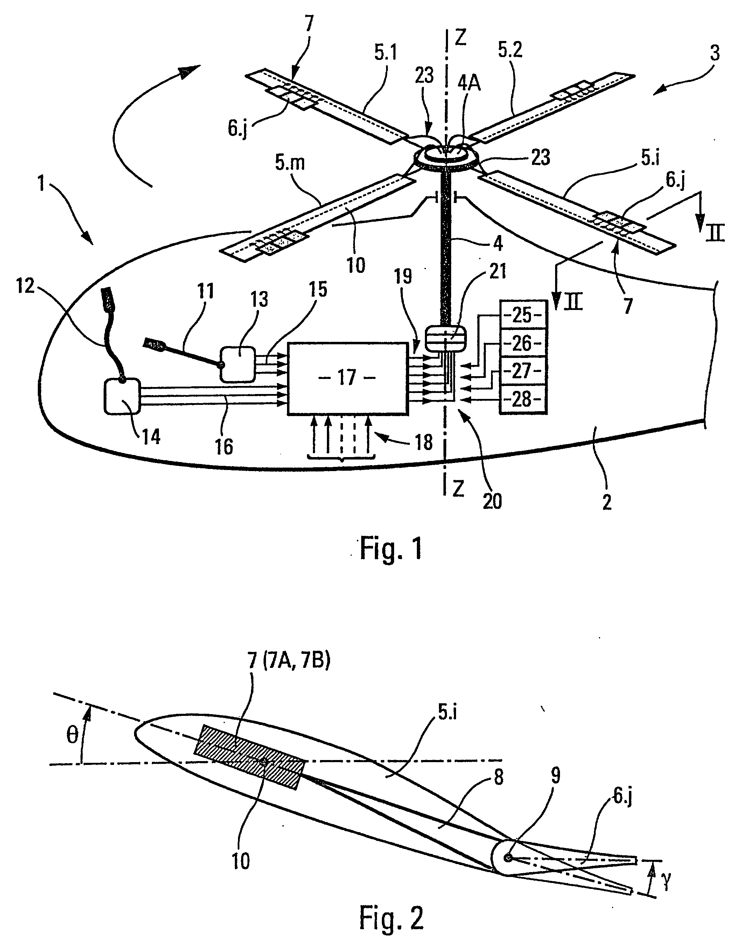

L'hélicoptère 1, illustré schématiquement sur la figure 1, comporte un fuselage 2 par rapport auquel peut tourner un rotor 3 (l'hélicoptère pourrait comporter plusieurs rotors 3), porté à l'extrémité supérieure d'un arbre vertical rotatif 4, d'axe Z-Z, par l'intermédiaire d'un moyeu 4A. Sur cette figure 1, le système d'entraînement en rotation du rotor 3 et de l'arbre 4 n'est pas représenté.

Le fuselage est représenté agrandi par rapport au rotor de façon à montrer les différents dispositifs qu'il contient.

Au moyeu 4A sont attachées une pluralité m de pales 5.1, 5.2, ... 5.i, ... 5.m (avec i = 2, 3, ..., m) régulièrement réparties autour de l'axe Z-Z de l'arbre 4 pour former ledit rotor 3, et chaque pale 5.i comporte une pluralité p de volets de bord de fuite 6.1, 6.2, ... 6.j, ... 6.p (avec j = 2, 3, ..., p) alignés le long de l'envergure de ladite pale. Dans l'exemple particulier de la figure 1, m est égal à 4 et p est égal à 3. Sur toutes les pales 5.i, le nombre p de volets 6.j est identique et, d'une pale à l'autre, l'agencement desdits volets est également identique.

A chacun des volets de bord de fuite 6.j de chacune des pales 5.i est associé un dispositif d'actionnement électrique 7, composé de deux actionneurs électriques 7A et 7B, en parallèle. Tous les dispositifs d'actionnement électrique 7 sont logés à l'intérieur desdites pales 5.i, chaque dispositif 7 étant à proximité du volet 6.j qui lui est associé et relié à celui-ci par une liaison mécanique courte et directe 8. Ainsi, chaque dispositif 7 peut faire pivoter rapidement le volet 6.j associé autour de son axe 9 (de direction générale parallèle à l'envergure de la pale correspondante), par l'intermédiaire de la liaison mécanique 8. Un tel pivotement peut s'effectuer indifféremment dans un sens ou dans l'autre.

Ainsi, de façon connue, de tels volets permettent de modifier le moment aérodynamique de tangage des pales qui les portent, autour de l'axe 10 de changement de pas desdites pales. Le braquage y d'un volet 6.j autour de son axe 9 permet de modifier le pas θ de la pale 5.i correspondante.

A l'intérieur du fuselage 2, sont prévus un levier de pas collectif 11 et un levier de pas cyclique 12, à la disposition d'un pilote (non représenté). A ces leviers 11 et 12 sont respectivement associés des capteurs 13 et 14, qui convertissent les déplacements desdits leviers en consignes de pilotage électriques ou optiques, qui sont adressées, respectivement par des liaisons 15 et 16, à un dispositif de commande de vol électrique 17. Ce dernier reçoit de plus, par des liaisons 18, des paramètres de vol délivrés par des capteurs, des accéléromètres, des gyromètres, etc ... (non représentés).

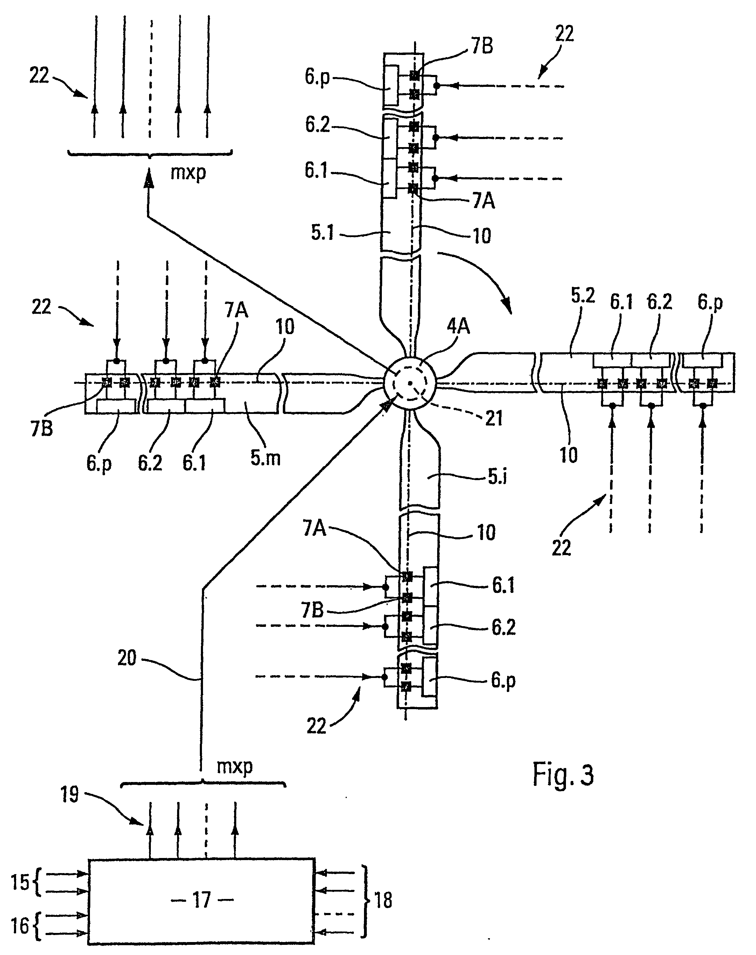

A partir desdites consignes de pilotage et desdits paramètres de vol (voir également la figure 3), le dispositif de commande de vol électrique 17 élabore une pluralité mxp d'ordres de commande, apparaissant sur les sorties 19 dudit dispositif 17 et chacun destiné à l'un des p volets 6.j d'une des m pales 5.i.

Par des liaisons multiples 20, la pluralité des mxp ordres de commande élaborés par le dispositif 17 sont adressés à un ensemble de collecteurs tournants formant une interface stationnaire-rotatif 21, qui font passer ces ordres sans altération du fuselage non tournant 2 au rotor 3. Ces ordres cheminent vers chacun des dispositifs d'actionnement 7 des volets 6.j, par mxp liaisons 22 (voir la figure 3), les liaisons 22 correspondant à une même pale 5.i pouvant être rassemblées dans un câble 23 (voir la figure 1).

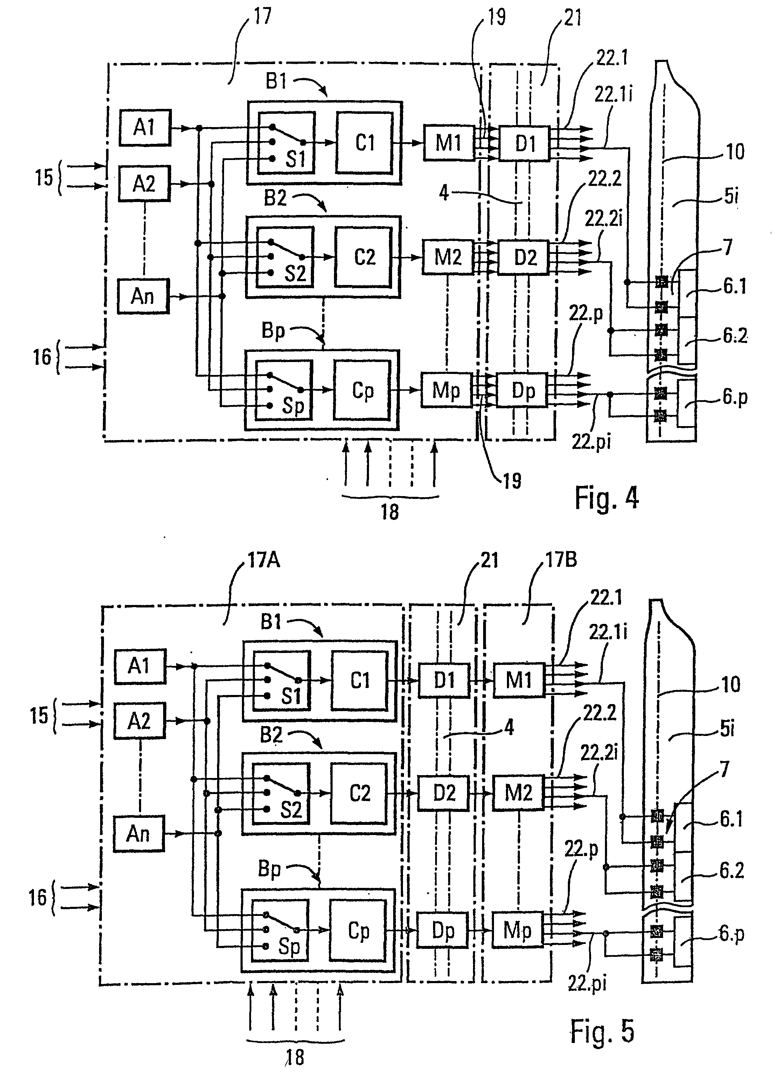

Sur la figure 4, on a représenté un exemple de réalisation du dispositif de commande de vol électrique 17, conforme à celui du brevet US-6 059 225. Cet exemple de réalisation comprend :
- une pluralité de n chaînes de génération d'ordres A1, A2, ... An, qui génèrent, à partir des signaux reçus par les liaisons 15, 16, 18 un ensemble de n premiers ordres de pilotage ;
- une pluralité de p chaînes d'asservissement B1, B2, ..., Bp, sélectionnant chacune l'une des chaînes de génération d'ordres A1 à An au moyen d'un sélecteur respectif S1 à Sp et élaborant des seconds ordres de pilotage au moyen d'un calculateur respectif C1 à Cp ; et
- une pluralité de p démultiplexeurs M1, M2, ..., Mj, ... Mp, dont chaque démultiplexeur Mj élabore, à partir desdits seconds ordres, des ordres de commande pour le volet 6.j de chaque pale 5.i.

Ainsi, l'ensemble des sorties desdits démultiplexeurs Mj forment les sorties 19 du dispositif 17.

Ces sorties 19 sont respectivement reliées à une pluralité p de collecteurs tournants D1, D2, ... Dj, ... Dp formant l'interface 21 pour transmettre lesdits ordres de commande, par les liaisons 22, auxdits volets 6.j des pales 5.i.

Avec un tel dispositif de commande de vol électrique 17, les liaisons 22 forment p groupes 22.1, 22.2, ..., 22.p, dont chacun d'eux est destiné à la commande de tous les volets 6.j d'ordre correspondant : le groupe 22.1 commande le volet 6.1 de chacune des m pales 5.1 à 5.m, le groupe 22.2 commande le volet 6.2 de chacune des pales 5.1 à 5.m, etc ...

Ainsi :
- le volet 6.1 de la pale 5.i est commandé par la liaison spécifique 22.1i du groupe 22.1 ;
- le volet 6.2 de la pale 5.i est commandé par la liaison spécifique 22.2i du groupe 22.2 ; etc ... et
- le volet 6.p de la pale 5.i est commandé par la liaison spécifique 22.pi du groupe 22.p.

Les liaisons 22 entre l'interface 21 et les dispositifs 7 d'actionnement des volets 6.j sont soigneusement protégées mécaniquement et électriquement dans l'arbre 4 et le moyeu 4A et à l'intérieur des pales 5.i. Elles y suivent des cheminements bien séparés et peuvent mettre en oeuvre des technologies différentes. Toutes ces précautions sont prises afin qu'un endommagement mécanique localisé ou bien une perturbation électromagnétique survenant du fait d'une cause extérieure ne puissent en aucun cas les rendre toutes inopérantes simultanément, et que soit ainsi maintenue en toute circonstance une capacité de piloter l'hélicoptère 1 qui soit suffisante pour poursuivre le vol en sécurité.

On voit que, selon ces dispositions, chaque chaîne de commande constituée par une chaîne d'asservissement Bj, un collecteur tournant Dj, un démultiplexeur Mj, les moteurs 7 de l'ensemble des volets 6.j, ainsi que toutes les liaisons 22 entre ces éléments, constitue un ensemble fonctionnel totalement indépendant des autres chaînes sans aucune autre communauté que les structures primaires vitales qui les supportent telles que le fuselage, l'arbre 4, le moyeu 4A et les pales.

Dans le but de réduire encore la probabilité d'un mode commun de défaillance, tel que par exemple pouvant résulter d'une insuffisance d'un logiciel, les différentes chaînes utilisent de préférence des technologies différentes. La chaîne dont la technologie est considérée comme globalement la plus fiable est préférentiellement affectée au pilotage des volets ayant la plus grande efficacité aérodynamique, c'est-à-dire en règle générale, ceux situés le plus près de l'extrémité de la pale et portant la référence 6.p sur les dessins.

De plus, afin de parer à une défaillance éventuelle d'une chaîne quelconque par l'un de ses éléments spécifique à une seule pale, ce qui ferait courir le risque d'un déséquilibre important des forces s'exerçant sur le rotor, chaque chaîne comporte un système d'autosurveillance 25 vérifiant en permanence la conformité de la réalisation des braquages des volets de la chaîne vis-à-vis des seconds ordres. En cas de non-conformité de la réalisation, tous les volets de la chaîne sont immobilisées mécaniquement. Le maintien en position des volets, nécessaire pour prévenir tout phénomène de flottement aérodynamique ou aéroélastique, doit être effectif quelle que soit la défaillance en cause, y compris s'il s'agit de la perte de l'énergie électrique propre à la chaîne considérée.

La variante de réalisation représentée sur la figure 5 diffère du mode de réalisation de la figure 4 en ce que les collecteurs D1, D2, ... Dj, ... Dp sont intercalés entre les chaînes d'asservissement B1, B2, ... Bj, ... Bp et les démultiplexeurs M1, M2, ... Mj, ... Mp, le dispositif 17 se trouvant alors partagé en deux parties 17A et 17B, séparées par l'interface 21.Dans ce cas, lesdits démultiplexeurs peuvent être logés dans le moyeu 4A du rotor 3.

Les modes de réalisation des figures 4 et 5 sont fonctionnellement équivalents. On peut trouver avantage à adopter l'un ou l'autre des ces modes de réalisation en fonction des technologies employées dans la chaîne considérée. En particulier, il est possible de choisir l'un ou l'autre de ces modes de réalisation pour les différentes chaînes de pilotage.

Par ailleurs, la présente invention permet aisément de faire assurer par le rotor 3 d'autres fonctions que celles de la sustentation et de la propulsion, sans introduire d'organe mécanique supplémentaire, et même en éliminant ou en simplifiant des organes mécaniques actuellement indispensables à cet effet sur les hélicoptères connus.

Des exemples de telles fonctions supplémentaires sont données ci-après.

On sait que les rotors d'hélicoptères, de grand diamètre et comportant des pales de forme élancée, sont sujets, au sol, à des oscillations du centre de gravité des pales dans un plan parallèle au plan de rotation de ces dernières. Ce mode d'oscillation est susceptible de se coupler aux mouvements du fuselage sur son train d'atterrissage lors de la montée en régime du rotor, avec un fort risque de divergence de ces oscillations couplées, avec pour conséquence potentielle le retournement et la destruction de l'appareil. Il s'agit du phénomène dit de "résonance au sol". Un couplage similaire, divergent ou auto-entretenu, peut également survenir en vol lorsque le rotor produit une forte poussée par interaction du rotor avec un mode propre de roulis de l'appareil ; c'est le phénomène dit de "résonance air".

La solution généralement adoptée pour éliminer les problèmes de résonance consiste à équiper le moyeu de dispositifs mécaniques appelés adaptateurs (effets de raideur) ou amortisseurs de traînée (effet d'amortissement), en même nombre que les pales.

En revanche, pour résoudre ce problème de résonance dans l'aéronef de la présente invention, il suffit de prévoir un dispositif 26, associé à des accéléromètres (non représentés), apte à ajouter aux ordres de commande, dans au moins certaines des chaînes de commande, un signal constitué par de petites composantes oscillatoires à la fréquence propre de résonance du rotor (fréquence vue par un observateur fixe, toujours inférieure à la moitié de la fréquence de rotation du rotor) avec amplitude maximale de l'ordre de 1 degré d'angle de pas. Ces composantes sont proportionnelles aux accélérations mesurées, à cette même fréquence, par deux desdits accéléromètres placés en partie fixe sur la boîte de transmission supportant le rotor et selon deux directions orthogonales à l'axe du rotor et orthogonales entre elles. Les composantes injectées dans les ordres de commande sont déphasées de façon à créer une rétroaction amortissant les oscillations propres du rotor.

Par rapport au système de commande de base décrit ci-dessus, il est nécessaire d'ajouter, pour chaque chaîne d'asservissement ainsi traitée, deux accéléromètres ainsi qu'un filtre déphaseur cyclique à deux entrées et deux sorties, pouvant être réalisé de façon analogique. Si la chaîne d'asservissement utilise une technologie numérique, les fonctions de filtrage/déphasage pourront être mises en oeuvre en tout ou partie grâce à un logiciel approprié.

Si l'on souhaite éliminer totalement les dispositifs amortisseurs mécaniques, la fonction antirésonance revêt un caractère critique ; il convient alors d'intervenir sur chacune des chaînes d'asservissement de façon indépendante. Sans dispositif spécifique, cette fonction bénéficie de l'autosurveillance de la réalisation des ordres implantée dans le système de base (dispositif 25) ainsi que de l'inhibition automatique de la chaîne en cas de non conformité. En cas de panne d'une chaîne dans la partie élaborant les ordres d'antirésonance, les autres chaînes qui disposent chacune d'une autorité égale à celle qui est défaillante, suffisent à compenser cette défaillance.

En variante, on peut choisir de ne mettre en oeuvre la fonction antirésonance que sur certaines chaînes de commande, sans redondance mais avec autosurveillance et inhibition automatique ; des adaptateurs mécaniques simplifiés et allégés (non représentés) sont alors nécessaires pour parer aux pannes éventuelles, associés à des procédures de précaution pour l'atterrissage et à une limitation du domaine de manoeuvre.

De plus, on sait que les tolérances de fabrication font que les pales, même neuves et réglées par le fabricant, ne sont jamais rigoureusement identiques. Lorsque le rotor tourne, de légères différences dans la répartition de la masse et dans la forme de la surface créent des déséquilibres, respectivement dans les forces inertielles et dans les forces aérodynamiques. Ces déséquilibres sont sources de vibration, notamment perceptibles à la fréquence de rotation du rotor (effet de balourd), et nécessitent usuellement des opérations de réglage du rotor, par ajout ou déplacement de masses additionnelles et braquages de petites surfaces aérodynamiques, appelées tabs. Ces opérations doivent être reprises régulièrement par suite d'évolutions mineures des pales (impacts, usure des bords d'attaque, absorption d'humidité, etc ) qui n'affectent jamais les pales de façon identique.

Sur l'aéronef conforme à la présente invention, il est aisé de prévoir un dispositif 27, associé à au moins un accéléromètre (non représenté) pour effectuer des aménagements mineurs permettant de compenser automatiquement et en permanence les déséquilibres entre pales, et d'éviter ainsi --ou au moins d'espacer-- les opérations manuelles de réglage, tout en assurant une détection continue de l'apparition de défauts hors norme et une surveillance de leur progression.

Si le système de commandes du rotor est déjà équipé du dispositif antirésonance 26, il est possible, pour le dispositif 27, d'utiliser l'un des deux accéléromètres de ce dernier pour la fonction d'autoréglage ; sinon, ledit dispositif 27 soit comprendre au moins un accéléromètre spécifique, installé selon les mêmes dispositions et orienté de préférence dans la direction où la réponse de la structure fixe au balourd du rotor s'avère la plus sensible (sens longitudinal ou bien latéral). L'information fournie par cet accéléromètre est analysée et convertie en signaux de correction qui sont ajoutés aux ordres de commande d'au moins l'une des chaînes de commande. L'effet de ces signaux est de décaler légèrement la position moyenne des volets concernés. Ces signaux doivent toujours rester de faible amplitude et leur autorité doit être limitée par un processus très fiable. Le caractère non critique de la fonction d'autoréglage permet de n'équiper qu'un nombre restreint de chaînes de commande, par exemple une seule. En cas de défaillance, la fonction peut être désactivée automatiquement ou bien manuellement par le pilote.

Le franchissement de seuils de correction prédéfinis peut être enregistré et constituer une information utile pour la maintenance de l'appareil en révélant ainsi l'apparition ou la progression de défauts sur une pale déterminée.

On sait par ailleurs que le pilotage d'un rotor assurant la sustentation d'un aéronef à voilure tournante nécessite de faire varier le pas des pales selon une loi cyclique et sinusoïdale en fonction de l'angle d'azimut décrit par chacune des pales : valeur statique moyenne, avec premier harmonique de l'angle d'azimut. Il est connu également que l'on peut réduire dans de très grandes proportions les vibrations créées par le rotor et perçues dans la cabine de l'aéronef en faisant varier le pas des pales selon des lois cycliques comportant certains harmoniques de cet angle.

De même, on sait que l'on peut, par la mise en oeuvre des lois multicycliques analogues s'étendant au minimum jusqu'au rang 4, réduire très efficacement le bruit émis par le rotor et perçu au sol. Cette réduction de bruit est particulièrement efficace et appréciable dans les conditions de vol notoirement bruyantes qui sont réunies lorsque l'hélicoptère approche de son aire d'atterrissage, en suivant une certaine pente de descente voisine de 6 degrés et à vitesse modérée (cas où les pales viennent interagir aérodynamiquement avec les tourbillons qu'elles ont elles-mêmes émis).

On comprendra aisément que, dans l'aéronef conforme à la présente invention, on peut prévoir un dispositif 28 apte à commander les volets 6.j des pales 5.i pour permettre de faire varier rapidement et directement la portance aérodynamique, avec un effet localisé mais néanmoins important et avec un faible retard. En effet, la réponse de la pale dans son mouvement de rotation en pas diminue rapidement au-delà du premier harmonique et ceci dès le second harmonique. Pour les harmoniques supérieurs, la réponse directe de la portance au braquage des volets joue donc un rôle dominant, mais sans que cela nécessite l'énergie très importante qui serait requise pour faire pivoter la pale complète.

Pour la mise en oeuvre de lois multicycliques, le dispositif 28 doit élaborer des ordres de braquage communs à tout le rotor, dérivés de la loi multicyclique de braquage et ajoutés aux ordres de commande en pas d'au moins certains volets 6.j.

Pour la réduction des vibrations, le dispositif 28 associé à des accéléromètres (non représentés) calcule lesdits ordres de braquage en minimisant certains critères calculés par pondération de mesures de vibration effectuées par lesdits accéléromètres répartis en plusieurs points de la cabine et selon plusieurs directions. Plusieurs algorithmes de minimisation, de type auto adaptatif, peuvent être utilisés.

En ce qui concerne la réduction du bruit, le dispositif 28 élabore des commandes multicycliques à partir de lois préétablies qui varient en fonction des paramètres généraux du vol, à savoir : la masse réduite, la vitesse anémométrique, la commande de braquage général des volets et la puissance des moteurs.

Lorsque les fonctions antibruit et antivibratoire sont mises en oeuvre simultanément, les commandes multicycliques sont obtenues en réalisant la somme des commandes élaborées pour chaque fonction considérée séparément.

Les commandes multicycliques étant établies et introduites dans au moins certaines chaînes de commande, le démultiplexeur Mj de la chaîne considérée élabore les ordres individuels pour chacune des pales.

La fonction antivibratoire du dispositif 28 ne nécessite que des amplitudes de braquage limitées, de l'ordre de 2 degrés. En cas de mauvais fonctionnement, elle affecte le confort, mais ne met pas l'appareil en péril. Cette fonction peut donc n'affecter que certaines chaînes de commande et non la totalité. En cas de défaillance, la fonction peut être désactivée automatiquement ou manuellement par le pilote.

La fonction antibruit du dispositif 28 nécessite, pour être totalement efficace, des amplitudes de braquage assez importantes, de l'ordre de 5 à 10 degrés. Son mauvais fonctionnement éventuel affecte la sécurité du vol, avec un risque d'endommagement rapide des ensembles mécaniques. Afin de parer à une telle défaillance qui pourrait être causée par l'un des éléments spécifiques à une seule pale, la fonction d'autosurveillance du dispositif 25, qui vérifie en permanence la conformité de la réalisation des braquages des volets pour le pilotage primaire, sera étendue afin d'assurer également la surveillance de la conformité de réalisation des commandes multicycliques. En cas de non conformité de la réalisation, cette seule fonction antibruit sera automatiquement inhibée. La fonction antibruit n'étant pas indispensable à la poursuite du vol, un nombre restreint de chaînes de commande peuvent en être équipées, par exemple une seule.

## Revendications

1. Aéronef comportant :
- un fuselage (2) ;
- des organes de pilotage (11 à 14) à la disposition d'un pilote, disposés dans ledit fuselage (2) et aptes à engendrer des consignes de pilotage ;
- au moins un rotor (3) tournant par rapport audit fuselage (2) et assurant les fonctions de sustentation dudit aéronef et de déplacement de celui-ci selon des axes de roulis et de tangage ainsi qu'en translation verticale et horizontale, ledit rotor comprenant au moins deux pales (5.i) dont le pas peut être commandé pour permettre audit rotor d'assurer lesdites fonctions ;
- des volets orientables (6.j) portés par lesdites pales pour commander le pas de celles-ci, chacune desdites pales comportant une pluralité de volets (6.i) ;
- des dispositifs d'actionnement électriques (7) portés par lesdites pales pour actionner lesdits volets orientables en vue de la commande du pas desdites pales ;
- un dispositif de commande de vol (17) disposé dans ledit fuselage et engendrant, à partir desdites consignes de pilotage et de signaux représentatifs de paramètres de vol, une pluralité d'ordres de commande pour la pluralité desdits dispositifs d'actionnement électriques, ledit dispositif de commande de vol (17) comportant autant de voies de commande distinctes (B1, B2, ..., Bp) qu'il y a de volets (6.1, 6.2, ..., 6.p) sur chaque pale (5.i) ;
- une pluralité de liaisons (19, 22) prévues entre ledit dispositif de commande de vol (17) et chacun desdits dispositifs d'actionnement électriques (7) pour adresser à chacun de ces dispositifs électriques (7), à travers une interface (21), l'un desdits ordres de commande ; et
- ladite interface stationnaire-rotatif (21) entre ledit fuselage et ledit rotor permettant à ladite pluralité de liaisons de transmettre lesdits ordres de commande auxdits actionneurs électriques, ladite interface (21) comportant autant de voies de transmission distinctes (D1, D2, ..., Dp) qu'il y a de voies de commande distinctes (B1, B2, ..., Bp), lesdites voies de commande distinctes dudit dispositif de commande de vol (17) étant respectivement associées auxdites voies de transmission distinctes de ladite interface (21) pour former, avec lesdites liaisons (19, 22), autant de chaînes de commande distinctes qu'il y a de volets sur chaque pale,
**caractérisé en ce qu'**il comporte de plus un dispositif (27) qui, à partir d'informations accélérométriques, engendre des signaux qu'il ajoute auxdits ordres de commande adressés à au moins certains desdits volets (6.j) pour assurer, à l'aide de ceux-ci, l'autoréglage de ladite voilure tournante, et **en ce que** :
- pour chaque pale, les volets (6.i) sont alignés le long de l'envergure de ladite pale et chaque pale comporte autant de volets, agencés de manière identique, que n'importe laquelle des autres pales ; et
- chacune desdites chaînes de commande engendre et véhicule les ordres de commande pour tous les dispositifs d'actionnement électriques (7) des volets (6.j) de même rang sur lesdites pales.

2. Aéronef selon la revendication 1,
**caractérisé en ce qu'**au moins une chaîne de commande est réalisée pour transmettre des ordres de commande qui sont adressés par voie électrique et **en ce qu'**au moins une autre chaîne de commande est réalisée pour transmettre des ordres de commande qui sont adressés par voie optique.

3. Aéronef selon la revendication 2,
**caractérisé en ce que** différentes chaînes de commande sont réalisées selon des technologies présentant des fiabilités différentes et **en ce que** les chaînes de commande associées aux volets proches des extrémités libres desdites pales sont réalisées selon la technologie la plus fiable.

4. Aéronef selon l'une des revendications 1 à 3,
**caractérisé en ce que** chaque dispositif d'actionnement électrique (7) est logé dans la pale (5.i) correspondante, à proximité immédiate du volet auquel il est associé.

5. Aéronef selon l'une des revendications 1 à 4,
**caractérisé en ce que** chaque dispositif d'actionnement électrique (7) comporte au moins deux actionneurs (7A, 7B) montés en parallèle.

6. Aéronef selon l'une des revendications 1 à 5,
**caractérisé en ce que** lesdits volets (6.j) sont agencés dans le bord de fuite desdites pales (5.i).

7. Aéronef selon l'une des revendications 1 à 6,
**caractérisé en ce qu'**il comporte un dispositif d'autosurveillance (25) vérifiant en permanence la conformité du braquage d'au moins certains desdits volets (6.j) vis-à-vis desdits ordres de commande adressés à ces derniers.

8. Aéronef selon l'une des revendications 1 à 7,
**caractérisé en ce qu'**il comporte un dispositif (26) qui, à partir d'informations accélérométriques, engendre des signaux qu'il ajoute auxdits ordres de commande adressés à au moins certains desdits volets (6.j) pour combattre, à l'aide de ceux-ci, le phénomène de résonance au sol et de résonance air.

9. Aéronef selon l'une des revendications 1 à 8,
**caractérisé en ce qu'**il comporte un dispositif (28) qui, à partir d'informations accélérométriques, engendre des signaux qu'il ajoute auxdits ordres de commande adressés à au moins certains desdits volets (6.j) pour minimiser automatiquement, à l'aide de ceux-ci, les vibrations engendrées par ledit rotor (3).

10. Aéronef selon l'une des revendications 1 à 9,
**caractérisé en ce qu'**il comporte un dispositif (28) qui engendre des signaux calculés en fonction de conditions de vol qu'il ajoute auxdits ordres de commande adressés à au moins certains desdits volets (6.j) pour combattre, à l'aide de ceux-ci, le bruit engendré par ledit rotor (3).

## Patentansprüche

1. Flugzeug, umfassend:
- einen Rumpf (2) ;
- einem Piloten zur Verfügung stehende Steuerorgane (11 bis 14), die in dem Rumpf (2) angeordnet sind und in der Lage sind, Steueranweisungen zu erzeugen;
- mindestens einen Rotor (3), der sich in Bezug auf den Rumpf (2) dreht und für folgende Funktionen, nämlich Auftrieb des Flugzeuges und seine Bewegung entlang von Roll- und Nickachsen sowie in vertikaler und horizontaler Translation, sorgt, wobei der Rotor mindestens zwei Blätter (5.i) umfasst, deren Blattwinkel gesteuert werden kann, um dem Rotor zu ermöglichen, die genannten Funktionen zu erfüllen;
- verstellbare Klappen (6.j), die von den Blättern getragen werden, um deren Blattwinkel zu steuern, wobei jedes der Blätter eine Vielzahl von Klappen (6.j) trägt;
- elektrische Betätigungsvorrichtungen (7), die von den Blättern getragen werden, um die verstellbaren Klappen im Hinblick auf die Steuerung des Blattwinkels zu betätigen;
- eine Flugsteuerungsvorrichtung (17), die im Rumpf angeordnet ist und ausgehend von den Steueranweisungen und von Signalen, die repräsentativ sind für Flugparameter, eine Vielzahl von Steuerbefehlen für die Vielzahl der elektrischen Betätigungsvorrichtungen erzeugt, wobei die Flugsteuerungsvorrichtung (17) so viele unterschiedliche Steuerwege (B1, B2, ..., Bp) umfasst, wie es Klappen (6.1, 6.2, ..., 6p) an jedem Blatt (5.i) gibt;
- eine Vielzahl von Verbindungen (19, 22) die zwischen der Flugsteuerungsvorrichtung (17) und jeder der elektrischen Betätigungsvorrichtungen (7) vorgesehen sind, um an jede dieser elektrischen Vorrichtungen (7) über eine Schnittstelle (21) einen der Steuerbefehle zu senden; und
- die Stator-Rotor-Schnittstelle (21) zwischen dem Rumpf und dem Rotor, die es der Vielzahl von Verbindungen ermöglicht, die Steuerbefehle zu den elektrischen Betätigungsvorrichtungen zu übertragen, wobei die Schnittstelle (21) so viele unterschiedliche Übertragungswege (D1, D2, ..., Dp) umfasst, wie es unterschiedliche Steuerwege (B1, B2, ..., Bp) gibt, wobei die unterschiedlichen Steuerwege der Flugsteuerungsvorrichtung (17) jeweils den unterschiedlichen Übertragungswegen der Schnittstelle (21) zugeordnet sind, um mit den Verbindungen (19, 22) so viele unterschiedliche Steuerkanäle zu bilden, wie es Klappen an jedem Blatt gibt,
**dadurch gekennzeichnet, dass** es darüber hinaus eine Vorrichtung (27) umfasst, die ausgehend von Informationen der Beschleunigungsmessung Signale erzeugt, die sie zu den Steuerbefehlen hinzufügt, die an mindestens einige Klappen (6.j) gesendet werden, um mit deren Hilfe die Selbstregelung des Drehflügels zu gewährleisten, und dass:
- bei jedem Blatt die Klappen (6.j) entlang der Spannweite des Blattes angeordnet sind und jedes Blatt so viele auf identische Weise angeordnete Klappen umfasst wie jedes beliebige der anderen Blätter; und
- jeder der Steuerkanäle die Steuerbefehle für alle elektrischen Betätigungsvorrichtungen (7) der Klappen (6.j) vom gleichen Rang auf den Blättern erzeugt und transportiert.

2. Flugzeug nach Anspruch 1, **dadurch gekennzeichnet, dass** mindestens ein Steuerkanal gebildet ist, um die Steuerbefehle zu übertragen, die auf elektrischem Weg gesendet werden, und dass mindestens ein anderer Steuerkanal gebildet ist, um die Steuerbefehle zu übertragen, die auf optischem Weg gesendet werden.

3. Flugzeug nach Anspruch 2, **dadurch gekennzeichnet, dass** verschiedene Steuerkanäle nach Technologien mit unterschiedlicher Zuverlässigkeit gebildet sind und dass die Steuerkanäle, die den Klappen zugeordnet sind, die sich in der Nähe der freien Enden der Blätter befinden, nach der zuverlässigsten Technologie gebildet sind.

4. Flugzeug nach einem der Ansprüche 1 bis 3, **dadurch gekennzeichnet, dass** jede elektrische Betätigungsvorrichtung (7) in dem entsprechenden Blatt (5.i) in unmittelbarer Nähe der Klappe untergebracht ist, der sie zugeordnet ist.

5. Flugzeug nach einem der Ansprüche 1 bis 4, **dadurch gekennzeichnet, dass** jede elektrische Betätigungsvorrichtung (7) mindestens zwei parallel montierte Wirkglieder (7A, 7B) umfasst.

6. Flugzeug nach einem der Ansprüche 1 bis 5, **dadurch gekennzeichnet, dass** die Klappen (6.j) an der Austrittskante der Blätter (5.i) angeordnet sind.

7. Flugzeug nach einem der Ansprüche 1 bis 6, **dadurch gekennzeichnet, dass** es eine Selbstüberwachungsvorrichtung (25) umfasst, die ständig überprüft, ob der Ausschlag von mindestens einigen Klappen (6.j) den Steuerbefehlen entspricht, die an die Letztgenannten gesendet werden.

8. Flugzeug nach einem der Ansprüche 1 bis 7, **dadurch gekennzeichnet, dass** es eine Vorrichtung (26) umfasst, die ausgehend von Informationen der Beschleunigungsmessung Signale erzeugt, die sie zu den Steuerbefehlen hinzufügt, die an mindestens einige Klappen (6.j) gesendet werden, um mit deren Hilfe das Phänomen der Bodenresonanz und der Luftresonanz zu bekämpfen.

9. Flugzeug nach einem der Ansprüche 1 bis 8, **dadurch gekennzeichnet, dass** es eine Vorrichtung (28) umfasst, die ausgehend von Informationen der Beschleunigungsmessung Signale erzeugt, die sie zu den Steuerbefehlen hinzufügt, die an mindestens einige Klappen (6.j) gesendet werden, um mit deren Hilfe die vom Rotor (3) erzeugten Schwingungen automatisch zu minimieren.

10. Flugzeug nach einem der Ansprüche 1 bis 8, **dadurch gekennzeichnet, dass** es eine Vorrichtung (28) umfasst, die in Abhängigkeit von Flugbedingungen berechnete Signale erzeugt, die sie zu den Steuerbefehlen hinzufügt, die an mindestens einige Klappen (6.j) gesendet werden, um mit deren Hilfe den vom Rotor (3) erzeugten Lärm zu bekämpfen.

## Claims

1. Aircraft comprising:
- a fuselage (2);
- control members (11 to 14) available to a pilot, which are disposed in the said fuselage (2) and are able to produce flying instructions;
- at least one rotor (3) revolving with respect to the said fuselage (2) and catering for the functions of uplift of the said aircraft and of displacement of the latter according to roll and pitching axes as well as in vertical and horizontal translation, the said rotor comprising at least two blades (5.i) whose pitch can be controlled so as to allow the said rotor to cater for the said functions;
- orientable flaps (6.j) carried by the said blades so as to control their pitch, each of the said blades comprising a plurality of flaps (6.i);
- electric actuation devices (7) carried by the said blades so as to actuate the said orientable flaps with a view to the control of the pitch of the said blades;
- a flight control device (17) disposed in the said fuselage and producing, from the said flying instructions and from signals representative of flight parameters, a plurality of control commands for the plurality of the said electric actuation devices, the said flight control device (17) comprising as many distinct control paths (B1, B2, ..., Bp) as there are flaps (6.1, 6.2, ..., 6.p) on each blade (5.i);
- a plurality of links (19, 22) provided between the said flight control device (17) and each of the said electric actuation devices (7) so as to address to each of these electric devices (7), through an interface (21), one of the said control commands; and
- the said stationary/rotary interface (21) between the said fuselage and the said rotor allowing the said plurality of links to transmit the said control commands to the said electric actuators, the said interface (21) comprising as many distinct transmission paths (D1, D2, ..., Dp) as there are distinct control paths (B1, B2, ..., Bp) , the said distinct control paths of the said flight control device (17) being respectively associated with the said distinct transmission paths of the said interface (21) so as to form, with the said links (19, 22), as many distinct control channels as there are flaps on each blade,
**characterized in that** it additionally comprises a device (27) which, on the basis of accelerometric information, produces signals which it appends to the said control commands addressed to at least some of the said flaps (6.j) so as to cater, with the aid of the latter, for the autoadjustment of the said rotary wing, and **in that**,
- for each blade, the flaps (6.i) are aligned along the span of the said blade and each blade comprises as many flaps, arranged identically, as any one of the other blades; and
- each of the said control channels produces and conveys the control commands for all the electric actuation devices (7) of the flaps (6.j) of the same rank on the said blades.

2. Aircraft according to Claim 1,
**characterized in that** at least one control channel is embodied to transmit control commands which are electrically addressed, and **in that** at least one other control channel is embodied to transmit control commands which are optically addressed.

3. Aircraft according to Claim 2,
**characterized in that** various control channels are embodied according to technologies having different reliabilities and **in that** the control channels associated with the flaps close to the free ends of the said blades are embodied according to the most reliable technology.

4. Aircraft according to one of Claims 1 to 3,
**characterized in that** each electric actuation device (7) is housed in the corresponding blade (5.i), in immediate proximity to the flap with which it is associated.

5. Aircraft according to one of Claims 1 to 4,
**characterized in that** each electric actuation device (7) comprises at least two actuators (7A, 7B) mounted in parallel.

6. Aircraft according one of to Claims 1 to 5,
**characterized in that** the said flaps (6.j) are arranged in the trailing edge of the said blades (5.i) .

7. Aircraft according to one of Claims 1 to 6,
**characterized in that** it comprises an autosurveillance device (25) permanently verifying the conformity of the deflection of at least some of the said flaps (6.j) with regard to the said control commands addressed to them.

8. Aircraft according to one of Claims 1 to 7,
**characterized in that** it comprises a device (26) which, on the basis of accelerometric information, produces signals which it appends to the said control commands addressed to at least some of the said flaps (6.j) so as to combat, with the aid of the latter, the phenomenon of ground resonance and air resonance.

9. Aircraft according to one of Claims 1 to 8,
**characterized in that** it comprises a device (28) which, on the basis of accelerometric information, produces signals which it appends to the said control commands addressed to at least some of the said flaps (6.j) so as to automatically minimize, with the aid of the latter, the vibrations produced by the said rotor (3).

10. Aircraft according to one of Claims 1 to 9,
**characterized in that** it comprises a device (28) which produces signals calculated as a function of flight conditions which it appends to the said control commands addressed to at least some of the said flaps (6.j) so as to combat, with the aid of the latter, the noise produced by the said rotor (3) .
